# EUROPEAN PATENT APPLICATION

(11) **EP 4 418 554 A1**
(43) Date of publication of application: **21.08.2024**
(21) Application number: 24152352.1
(22) Date of filing: 17.01.2024
(51) Int. Cl.: H04B 7/06

(54) **DEVICES, METHODS AND APPARATUSES FOR MULTICAST TRANSMISSION**

(30) Priority: 16.02.2023 IN 202341010433
(71) Applicant: Nokia Technologies Oy, 02610 Espoo (FI)
(72) Inventor: MALKAMÄKI, Esa Mikael, Espoo (FI); PANIGRAHI, Bighnaraj, Bangalore (IN); GODIN, Philippe, Versailles (FR); ELMALI, Ugur Baran, Munich (DE); MAJUMDAR, Chitradeep, Bangalore (IN)
(74) Representative: Nokia EPO representatives

(57) **Abstract**

Embodiments of the present disclosure disclose devices, methods and apparatuses for multicast transmission. A terminal device may receive a mode indication of multicast transmission from a network device. The mode indication may indicate a beam mapping mode which is activated among multiple beam mapping modes, and the beam mapping mode may be associated with a mapping between a transmission beam and a physical downlink control channel (PDCCH) monitoring occasion for the terminal device. The terminal device may further perform a PDCCH monitoring based on the mode indication.

## Description

### FIELD

Various example embodiments relate to the field of communication, and in particular, to devices, methods, apparatuses and computer readable storage medium for multicast transmission.

### BACKGROUND

Multicast and Broadcast Services (MBS) is a point-to-multipoint (PTM) service that can improve the network radio resource efficiency and user experience when transmitting the same content to multiple users that are interested in receiving the service. In Release 17 of the third generation partnership project (3GPP), a terminal device in a connected state is allowed to receive a multicast transmission. Release 17 enables a terminal device in the connected state to receive a multicast transmission, accordingly, reliability of data reception is ensured by hybrid automatic repeat request (HARQ) retransmission and a dynamic modulation-and-coding scheme (MCS) selection.

With the development of the wireless communication technology, the supporting for multicast has evolved from a terminal device in a connected state to a terminal device in an inactive state. It is desirable to configure a multicast transmission in a cell having both a terminal device in a connected state and another terminal device in an inactive state in a way of enhancing performance and/or reducing power consumption. Further enhancements to the multicast transmission need to be studied.

### SUMMARY

In general, example embodiments of the present disclosure provide devices, methods, apparatuses and computer readable storage medium for multicast transmission.

In a first aspect, there is provided a terminal device. The terminal device may include one or more transceivers; and one or more processors coupled to the one or more transceivers, and the one or more processors are configured to cause the terminal device to: receive a mode indication of multicast transmission from a network device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device; and perform a PDCCH monitoring based on the mode indication.

In a second aspect, there is provided a network device. The network device may include one or more transceivers; and one or more processors coupled to the one or more transceivers, and the one or more processors are configured to cause the network device to: transmit a mode indication of multicast transmission to a terminal device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device; and perform a multicast transmission based on the mode indication.

In a third aspect, there is provided a method implemented at a terminal device. The method may include: receiving a mode indication of multicast transmission from a network device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device; and performing a PDCCH monitoring based on the mode indication.

In a fourth aspect, there is provided a method implemented at a network device. The method may include: transmitting a mode indication of multicast transmission to a terminal device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device; and performing a multicast transmission based on the mode indication.

In a fifth aspect, there is provided an apparatus of a terminal device. The apparatus may include: means for receiving a mode indication of multicast transmission from a network device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device; and means for performing a PDCCH monitoring based on the mode indication.

In a sixth aspect, there is provided an apparatus of a network device. The apparatus may include: means for transmitting a mode indication of multicast transmission to a terminal device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device; and means for performing a multicast transmission based on the mode indication.

In a seventh aspect, there is provided a terminal device. The terminal device may include at least one processor; and at least one memory including computer program codes, wherein the at least one memory and the computer program codes are configured to, with the at least one processor, cause the terminal device to: receive a mode indication of multicast transmission from a network device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device; and perform a PDCCH monitoring based on the mode indication.

In an eighth aspect, there is provided a network device. The network device may include at least one processor; and at least one memory including computer program codes, wherein the at least one memory and the computer program codes are configured to, with the at least one processor, cause the network device to: transmit a mode indication of multicast transmission to a terminal device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device; and perform a multicast transmission based on the mode indication.

In a ninth aspect, there is provided a non-transitory computer readable medium including program instructions for causing an apparatus to perform at least the method according to third or fourth aspect.

In a tenth aspect, there is provided a computer program comprising instructions, which, when executed by an apparatus, cause the apparatus at least to: receive a mode indication of multicast transmission from a network device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device; and perform a PDCCH monitoring based on the mode indication.

In an eleventh aspect, there is provided a computer program comprising instructions, which, when executed by an apparatus, cause the apparatus at least to: transmit a mode indication of multicast transmission to a terminal device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device; and perform a multicast transmission based on the mode indication.

In a twelfth aspect, there is provided a terminal device. The terminal device may include: receiving circuitry, configured to receive a mode indication of multicast transmission from a network device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device; and monitoring circuitry, configured to perform a PDCCH monitoring based on the mode indication.

In a thirteenth aspect, there is provided a network device. The network device may include: first transmitting circuitry, configured to transmit a mode indication of multicast transmission to a terminal device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device; and second transmitting circuitry, configured to perform a multicast transmission based on the mode indication.

In a fourteenth aspect, there is provided a terminal device. The terminal device may include one or more transceivers; and one or more processors coupled to the one or more transceivers, and the one or more processors are configured to cause the terminal device to: receive a monitoring configuration from a network device, wherein the monitoring configuration indicates one or more physical downlink control channel (PDCCH) monitoring occasions for at least one transmission beam associated with a synchronization signal block (SSB) beam; and perform PDCCH monitoring based on the monitoring configuration.

In a fifteenth aspect, there is provided a network device. The network device may include one or more transceivers; and one or more processors coupled to the one or more transceivers, and the one or more processors are configured to cause the network device to: transmit a monitoring configuration to a terminal device, wherein the monitoring configuration indicates one or more physical downlink control channel (PDCCH) monitoring occasions for at least one transmission beam associated with a synchronization signal block (SSB) beam; and perform a transmission based on the monitoring configuration.

In a sixteenth aspect, there is provided a method implemented at a terminal device. The method may include: receiving a monitoring configuration from a network device, wherein the monitoring configuration indicates one or more physical downlink control channel (PDCCH) monitoring occasions for at least one transmission beam associated with a synchronization signal block (SSB) beam; and performing PDCCH monitoring based on the monitoring configuration.

In a seventeenth aspect, there is provided a method implemented at a network device. The method may include: transmitting a monitoring configuration to a terminal device, wherein the monitoring configuration indicates one or more physical downlink control channel (PDCCH) monitoring occasions for at least one transmission beam associated with a synchronization signal block (SSB) beam; and performing a transmission based on the monitoring configuration.

In an eighteenth aspect, there is provided an apparatus of a terminal device. The apparatus may include: means for receiving a monitoring configuration from a network device, wherein the monitoring configuration indicates one or more physical downlink control channel (PDCCH) monitoring occasions for at least one transmission beam associated with a synchronization signal block (SSB) beam; and means for performing PDCCH monitoring based on the monitoring configuration.

In a nineteenth aspect, there is provided an apparatus of a network device. The apparatus may include: means for transmitting a monitoring configuration to a terminal device, wherein the monitoring configuration indicates one or more physical downlink control channel (PDCCH) monitoring occasions for at least one transmission beam associated with a synchronization signal block (SSB) beam; and means for performing a transmission based on the monitoring configuration.

In a twentieth aspect, there is provided a terminal device. The terminal device may include at least one processor; and at least one memory including computer program codes, wherein the at least one memory and the computer program codes are configured to, with the at least one processor, cause the terminal device to: receive a monitoring configuration from a network device, wherein the monitoring configuration indicates one or more physical downlink control channel (PDCCH) monitoring occasions for at least one transmission beam associated with a synchronization signal block (SSB) beam; and perform PDCCH monitoring based on the monitoring configuration.

In a twenty-first aspect, there is provided a network device. The network device may include at least one processor; and at least one memory including computer program codes, wherein the at least one memory and the computer program codes are configured to, with the at least one processor, cause the network device to: transmit a monitoring configuration to a terminal device, wherein the mapping configuration indicates one or more physical downlink control channel (PDCCH) monitoring occasions for at least one transmission beam associated with a synchronization signal block (SSB) beam; and perform a transmission based on the monitoring configuration.

In a twenty-second aspect, there is provided a non-transitory computer readable medium comprising program instructions for causing an apparatus to perform at least the method according to sixteenth or seventeenth aspect.

In a twenty-third aspect, there is provided a computer program including instructions, which, when executed by an apparatus, cause the apparatus at least to: receive a monitoring configuration from a network device, wherein the monitoring configuration indicates one or more physical downlink control channel (PDCCH) monitoring occasions for at least one transmission beam associated with a synchronization signal block (SSB) beam; and perform PDCCH monitoring based on the monitoring configuration.

In an twenty-fourth aspect, there is provided a computer program including instructions, which, when executed by an apparatus, cause the apparatus at least to: transmit a monitoring configuration to a terminal device, wherein the monitoring configuration indicates one or more physical downlink control channel (PDCCH) monitoring occasions for at least one transmission beam associated with a synchronization signal block (SSB) beam; and perform a transmission based on the monitoring configuration.

In a twenty-fifth aspect, there is provided a terminal device. The terminal device may include: receiving circuitry, configured to receive a monitoring configuration from a network device, wherein the monitoring configuration in indicates ludes one or more physical downlink control channel (PDCCH) monitoring occasions for at least one transmission beam associated with a synchronization signal block (SSB) beam; and monitoring circuitry, configured to perform PDCCH monitoring based on the monitoring configuration.

In a twenty-sixth aspect, there is provided a network device. The network device may include: first transmitting circuitry, configured to transmit a monitoring configuration to a terminal device, wherein the monitoring configuration includes one or more physical downlink control channel (PDCCH) monitoring occasions for at least one transmission beam associated with a synchronization signal block (SSB) beam; and first transmitting circuitry, configured to perform a transmission based on the monitoring configuration.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
Fig. 1 shows an example of communication network environment in which example embodiments of the present disclosure may be implemented;
Fig. 2 shows an example of a signaling process for a configuration for monitoring a multicast transmission according to some embodiments of the present disclosure;
Fig. 3A shows an example of beams for the multicast transmissions according to some embodiments of the present disclosure;
Fig. 3B-Fig.3D show an example of mappings between PDCCH monitoring occasions to transmission beams for multiple beam mapping modes, respectively, according to embodiments of the present disclosure;
Fig. 4 shows an example of a signaling process for a mapping configuration and a mode indication according to some embodiments of the present disclosure;
Fig. 5 shows another example of a signaling process for a mapping configuration and a mode indication according to some embodiments of the present disclosure;
Fig. 6 shows another example of a signaling process for configuration of a multicast transmission according to some embodiments of the present disclosure;
Fig. 7 shows a flowchart of an example method implemented at a terminal device in accordance with some embodiments of the present disclosure;
Fig. 8 shows a flowchart of an example method implemented at a network device in accordance with some embodiments of the present disclosure
Fig. 9 is a simplified block diagram of a device that is suitable for implementing embodiments of the present disclosure; and
Fig. 10 shows an example of the computer readable medium in form of CD or DVD.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein may be implemented in various manners other than the ones described below.

In the following description and claims, unless defined otherwise, all technical and scientific terms used herein have the same meaning as commonly understood by one of ordinary skills in the art to which the present disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It may be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s) that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as long term evolution (LTE), LTE-advanced (LTE-A), wideband code division multiple access (WCDMA), high-speed packet access (HSPA), narrow band Internet of things (NB-IoT) and so on. Furthermore, the communications between a terminal device and a network device in the communication network may be performed according to any suitable generation communication protocols, including, but not limited to, the third generation (3G), the fourth generation (4G), 4.5G, the fifth generation (5G) communication protocols, the sixth generation (6G) communication protocols and/or beyond. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a remote radio unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

The term "beamforming" as used herein may be referred to as spatial filtering, directional transmission, or directional reception. Beamforming is a signal processing technique that may be used at a transmitting device and/or a receiving device to shape or steer an antenna beam along a spatial path between the transmitting device and the receiving device. Beamforming may rely on antenna elements of an antenna array for signals propagating at specific orientations.

As used herein, the term "beam" may refer to a communication resource. Different beams may be considered as different resources. A beam may also be represented as a spatial filter. A technology for forming a beam may be a beamforming technology or another technology. The beamforming technology may be specifically a digital beamforming technology, analog beamforming technology, or a hybrid digital/analog beamforming technology. A communication device (including the terminal device and the network device) may communicate with another communication device through one or more beams. One beam may include one or more antenna ports and be configured for a data channel, a control channel, or the like. One or more antenna ports forming one beam may also be considered as an antenna port set. A beam may be configured with a set of resource, or a set of resource for measurement, and a beam may be represented by for example a reference signal and/or related resource for the reference signal. Abeam may also represent by a reference cell identifier or resource identifier.

In Release 17, MBS only allows for a terminal device in a connected state to receive multicast. A point to multipoint (PTM) transmission efficiently provides MBS services to multiple terminal devices by using a same radio framework as a unicast transmission. Release 17 enables a reception of a multicast service by a terminal device in a connected state. Reliability of data reception may be ensured by hybrid automatic repeat request (HARQ) retransmission and a dynamic modulation-and-coding scheme (MCS) selection. Furthermore, point to point (PTP) transmissions may also be configured for a terminal device in a connected state.

In Release 18, a terminal device in an inactive state is also allowed to receive a multicast transmission for scalability and power saving purposes. The configuration for monitoring a multicast transmission is under studying now. Currently, there are several options for the configuration. One of the options is to provide the configuration by adopting a method similar to a broadcast in Release 17. That is, a network device broadcasts system information block (SIB)/multicast control channel (MCCH) periodically, so that a terminal device in an inactive state may receive the configuration. Another option is that the terminal device, while in the connected state, receives a configuration of multicast reception for all the cells in the RNA, and while the terminal device is in the inactive state, SIB/MCCH may provide further information in the cells regarding the current state of the multicast services.

If the network device uses beams, e.g., synchronization signal block (SSB) beams, in a given cell, then in Release 17, a conventional new radio (NR) beam management of radio resource control (RRC) connected state can be used because a multicast transmission is only received by a terminal device in RRC connected mode. The terminal device may be configured to measure multiple reference signals of different beams and to report at least one strongest beam to a network device. The network device may select a beam for the terminal device to monitor and indicate the monitoring information to the terminal device. Each beam may correspond to a transmission configuration indicator (TCI) state. The terminal device may be configured with multiple candidate TCI states by RRC signaling and activate one of the TCI states by medium access control (MAC) signaling.

In Release 18, a terminal may receive a multicast transmission either in a connected state or in an inactive state. When the terminal device is set to inactive state, the terminal device may stop sending a feedback and stop reporting measurements. Thus the network device may not know which beam is the strongest for a given terminal device and which beam the terminal device may receive. Furthermore, the network device may not even know how many terminal devices are still camping on a cell. Therefore, the network may send the multicast transmission to all beams of the cell and therefore may use some forms of beam sweeping.

If beam sweeping mechanism is applied for a terminal device in inactive state, another terminal device in the connected state would be unaware of this and unnecessarily consume power by blindly decoding all the physical downlink control channel (PDCCH) occasions allocated to the beams. In addition, if a free scheduling mechanism where any beam can be scheduled at any PDCCH occasion, is applied as that used in Release 17 for a multicast transmission, then a first terminal device in an inactive state would consume more power by trying to decode all the PDCCH occasions. Furthermore, beam sweeping over all beams of a cell is inefficient when there are only a few terminal devices in the inactive state or if most of the terminal devices in inactive states are in the area covered by one or a few beams. In turn, such a scenario where beam sweeping does not cover all beams also needs to be handled. Thus, it is desirable to provide a solution to monitor a multicast transmission with reduced power consumption and improved efficiency.

In embodiments of the present disclosure, a solution for monitoring a multicast transmission with reduced power consumption and improved efficiency is provided. Specifically, according to embodiments of the present disclosure, a terminal device receives a mode indication of multicast transmission from a network device, wherein the mode indication indicates a beam mapping mode which is activated among a plurality of beam mapping modes, and wherein the beam mapping mode is associated with a mapping between a transmission beam and a physical downlink control channel (PDCCH) monitoring occasion for the terminal device. Then the terminal device performs a PDCCH monitoring based on the mode indication.

In another aspect of the present disclosure, another solution for monitoring a multicast transmission with reduced power consumption and improved efficiency is provided. According to embodiments of the present disclosure, a terminal device receives a monitoring configuration from a network device, wherein the monitoring configuration indicates one or more physical downlink control channel (PDCCH) monitoring occasions for at least one transmission beam associated with a synchronization signal block (SSB) beam. Then the terminal device performs PDCCH monitoring based on the monitoring configuration. At least one transmission beam may be partial of the beams associated with SSBs which cover a cell.

With this solution, a terminal device is aware of which PDCCH monitoring occasion(s) to be monitored and which PDCCH monitoring occasion(s) may be skipped during a monitoring process for receiving a multicast transmission. Therefore, the power consumption of the terminal device is significantly reduced and the monitoring efficiency is significantly improved. In addition, the network device can configure multiple mapping modes for a transmission beam and a PDCCH monitoring occasion, indicate the terminal device to activate one mapping mode, and switch from the activated mapping mode into another mapping mode, Therefore, a configuration and a control of the multicast transmission to the terminal device may be more flexible and dynamic.

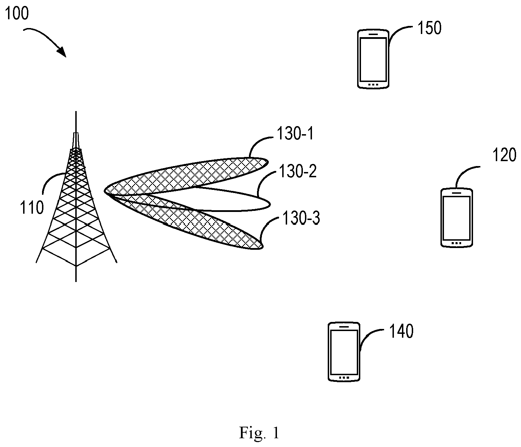

Herein after, for illustrative purposes, principle and example embodiments of the present disclosure for the configuration of monitoring a multicast transmission will be described below with reference to Fig. 1-Fig10. However, it is to be noted that these embodiments are given to enable the skilled in the art to understand inventive concepts of the present disclosure and implement the solution as proposed herein, and not intended to limit scope of the present application in any way.

Fig. 1 illustrates an example communication network environment 100 in which example embodiments of the present disclosure may be implemented. The communication network environment 100, which may be a part of a communication network, includes terminal devices and network devices.

As illustrated in Fig. 1, the communication network environment 100 may include a network device110, a terminal device 120, a terminal device 140, and a terminal device 150. In some embodiments, the network device 110 may include but not be limited to a NR NB (also referred to as a gNB), and the terminal devices 120, 140, and 150 may include but not be limited to a user equipment (UE). In some other embodiments, the terminal device 120, the terminal device 140, the terminal device 150, and network device 110 may be any electronic device supporting wired/wireless communication.

The network device 110 may communicate with any of the terminal devices 120 140, or 150. In the communication network environment 100, a link from the network device 110 to any of the terminal devices 120, 140, or 150 may be referred to as a downlink, a link from any of the terminal devices 120, 140, or 150 to the network device 110 may be referred to as an uplink, and a link between the terminal devices 120, 140, or 150 may be referred to as sidelink.

In downlink, the network device 110 is a transmitting (TX) device (or a transmitter) while any of the terminal devices 120, 140, or 150 is a receiving (RX) device (or a receiver). In uplink, any of the terminal devices 120, 140, or 150 is a transmitting TX device (or a transmitter) while the first network device 110 is a RX device (or a receiver). In some embodiments, the network device 110 and any of the terminal devices 120, 140, or 150 may communicate with direct links/channels. The terminal devices 120, 140, or 150 may communicate with each other directly based on a sidelink channel.

As shown in the example of Fig. 1, the communication network environment 100 may perform a multicast transmission. For example, the network device 110 may transmit multicast services to the terminal device 120 and the terminal device 140. As illustrated in Fig. 1, the network device 110 is configured with multiple beams 130-1 to 130-3. Among the configured beams, at least one beam is used to transmit a multicast transmission. For example, as shown in Fig. 1, the beams with filled patterns (e.g., beams 130-1 and 130-3) are illustrated as beams for multicast transmissions to the terminal devices 120 and 140. In some embodiments, a terminal device (e.g., 120) in the communication network environment 100 may be in an inactive state, and another terminal device (e.g., 140) in the communication network environment 100 may be in a connected state. In other words, the communication network environment 100 may include terminal device(s) in an inactive state and terminal device(s) in a connected state.

For example, as shown in Fig. 1, the terminal devices 120, 140, and 150 among other terminal devices not shown in Fig. 1 may receive multicast transmissions from the network device 110. In some embodiments, one or more of the terminal devices 120, 140, or 150 are in an inactive state and may receive the multicast services. For example, the terminal device 120 may be in the inactive state and may receive a multicast transmission associated with the beam 130-1. In some embodiments, one or more of the terminal devices 120, 140, or 150 are in a connected state and may receive the multicast services. For example, the terminal device 140 may be in the connected state and may receive a multicast transmission associated with the beam 130-3. In some embodiments, a terminal device in an inactive state and a terminal device in a connected state may co-exist in the communication network environment 100 for receiving respective one or more multicast transmissions.

It should be understood that, although three terminal devices are shown in Fig. 1, the number of terminal devices in the embodiments of the present disclosure is not limited to be three, and any other numbers of terminal devices may be used in the communication network environment 100. In addition, the number of beams configured for the network device 110 is not limited to be three, and any other number of beams may also be configured.

Furthermore, communications among devices in the communication environment 100 may be implemented according to any appropriate communication protocol(s), including, but not limited to, cellular communication protocols of the third generation (3G), the fourth generation (4G) and the fifth generation (5G), the sixth generation (6G), and on the like, wireless local network communication protocols such as Institute for Electrical and Electronics Engineers (IEEE) 802.11 and the like, and/or any other protocols currently known or to be developed in the future. Moreover, the communication may utilize any appropriate wireless communication technology, comprising but not limited to: Code division multiple access (CDMA), frequency division multiple access (FDMA), time division multiple access (TDMA), frequency division duplex (FDD), time division duplex (TDD), multiple-input multiple-output (MIMO), orthogonal frequency division multiple (OFDM), discrete fourier transform spread OFDM (DFT-s-OFDM) and/or any other technologies currently known or to be developed in the future.

In some embodiments, the network device 110 may transmit a mode indication of multicast transmission to a terminal device (e.g., terminal device 120). The mode indication may indicate a beam mapping mode which is activated among multiple beam mapping modes, and the beam mapping mode is associated with a mapping between a transmission beam and a physical downlink control channel (PDCCH) monitoring occasion for the terminal device (e.g., terminal device 120). The network device 110 may perform a multicast transmission based on the mode indication.

At the terminal device' side, the terminal device (e.g., any of the terminal devices 120, 140, or 150) may receive the mode indication of multicast transmission from the network device 110. The terminal device further performs a PDCCH monitoring based on the mode indication, more particularly based on the mapping associated with the mode indication.

In some embodiments, the network device 110 may transmit a monitoring configuration to a terminal device (e.g., a terminal device 120). The monitoring configuration may indicate one or more physical downlink control channel (PDCCH) monitoring occasions for at least one transmission beam associated with a synchronization signal block (SSB) beam. The network device 110 may further perform a transmission based on the monitoring configuration.

Accordingly, at the terminal device's side, the terminal device (e.g., any of terminal devices 120, 140, or 150) may receive a monitoring configuration associated with a beam mapping mode from a network device. The terminal device may further perform PDCCH monitoring based on the monitoring configuration.

Advantageously, with the embodiments of the present disclosure, a terminal device may be aware of which PDCCH monitoring occasion(s) to be monitored and which PDCCH monitoring occasion(s) may be skipped during a monitoring process for receiving a multicast transmission. Therefore, the power consumption of the terminal device is significantly reduced and the monitoring efficiency is significantly improved. In addition, the network device can configure multiple mapping modes for a transmission beam and a PDCCH monitoring occasion, indicate the terminal device to activate one mapping mode, to switch from the activated mapping mode into another mapping mode. Therefore, a configuration and a control of the multicast transmission to the terminal device can be more flexible and dynamic.

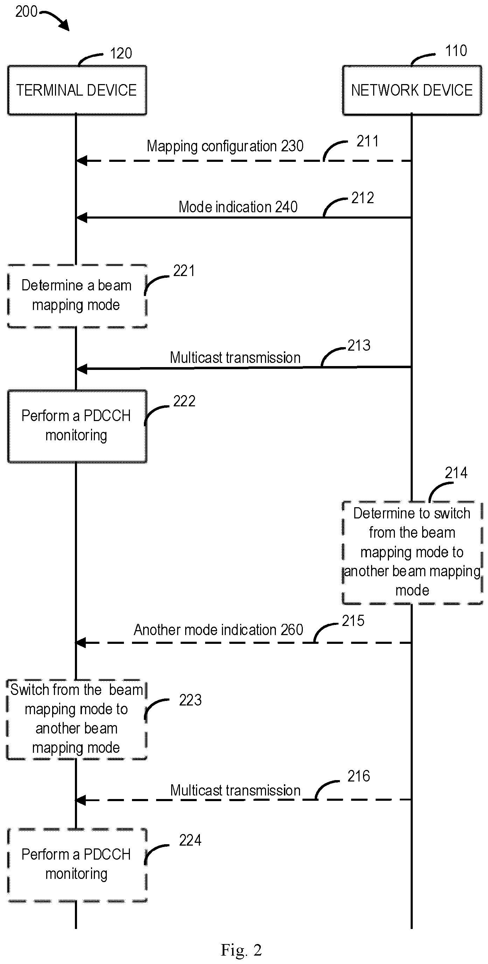

Fig. 2 illustrates an example signaling process 200 for a configuration for monitoring a multicast transmission according to some embodiments of the present disclosure. For the purpose of discussion, the process 200 will be described with reference to Fig. 1. The process 200 may involve the network device 110 and any of terminal devices 120, 140, or 150 as shown in Fig. 1. For the purpose of illustration, the terminal device for performing the process 200 is the terminal device 120. The process 200 may also be applied to any of the terminal devices 140 or 150 or any other terminal devices not shown in Fig. 1.

It may be understood that although only one terminal device 120 is shown in Fig. 2, the network device 110 may communicate with more than one terminal device. In addition, although the process 200 is described in combination with the communication network environment 100 of Fig. 1, the process 200 may be likewise applied to other communication network scenarios with multicast transmissions. Furthermore, in the process 200, it is possible to add, omit, modify one or more operations, or the operations may also be performed in any suitable order without departing from the scope of the present disclosure.

In the process 200, at 211, as an alternative operation, the network device 110 may transmit a mapping configuration 230 to the terminal device 120. In some embodiments, the mapping configuration 230 may include a configuration for a mapping of one or more PDCCH monitoring occasions to at least one transmission beam, and the mapping is associated with a beam mapping mode. In some embodiments, a transmission beam is associated with a synchronization signal block (SSB) beam or a channel state information-reference signal (CSI-RS) beam.

In some embodiments, the mapping configuration 230 may configure the terminal device 120 with multiple, e.g., three, beam mapping modes, and each of the beam mapping mode is associated with a mapping between at least one PDCCH monitoring occasions to at least one transmission beam. In other words, the mapping configuration 230 may indicate multiple mappings for multiple beam mapping modes that may be configured for the terminal device 120.

In some embodiments, the mapping configuration 230 is transmitted by the network device 110 via a radio resource control (RRC) reconfiguration message or an RRC release message or via a multicast control channel (MCCH).

In some embodiments, the beam mapping modes that may be configured by the mapping configuration 230 may include the following mapping modes or scheduling modes:
- a beam sweeping mode (a first mode), in which a PDCCH monitoring occasion for a beam is pre-configured, e.g., each PDCCH monitoring occasion during a monitoring process is pre-configured and mapped to respective transmission beams, i.e., one beam is mapped per PDCCH monitoring occasion;
- a free scheduling mode (a second mode), in which a PDCCH monitoring occasion for a beam is dynamically scheduled, e.g., each PDCCH monitoring occasion during a monitoring process is dynamically scheduled and may be mapped to any transmission beam;
- an intermediate mode (a third mode). In some embodiments, in the intermediate mode, a PDCCH monitoring occasion for at least one beam is pre-configured and on a PDCCH monitoring occasion (e.g., another PDCCH monitoring occasion), beams are freely scheduled, e.g., a first part of PDCCH monitoring occasions during a monitoring process is pre-configured and mapped to respective transmission beams, and a second part of PDCCH monitoring occasions during the monitoring process is dynamically scheduled and may be mapped to any transmission beam. In some other embodiments, on at least one PDCCH monitoring occasion, a part of beams is freely scheduled. The third mode may also be called as partial sweep mode or partial free scheduling.

The third mode, which may be called as the intermediate mode, may also be described as a mode of mapping more than one beam to at least one PDCCH monitoring occasion. It is a mode between the first mode (in which one beam mapped to each PDCCH monitoring occasion) and the second mode (in which any beam mapped to all PDCCH monitoring occasion), i.e., the third mode may covering any other mapping.

Since release 17 multicast assumes a free scheduling mode without specifying or configuring any mapping between transmission beams and PDCCH monitoring occasions, the free scheduling mode of operation may be considered as a default operation mode which may be assumed if no mode is activated.

Having the free scheduling mode as a default operation mode, it may be enough to specify or configure only one other mode (e.g., beam sweeping or intermediate mode) and the mode indication described in this disclosure as following may be implemented to include a boolean parameter (or other types of parameters), where a value 'true' may indicate that the configured other mode is activated and value 'false' may indicate that the default mode (e.g., free scheduling mode) is activated, and vice visa. Alternatively the mode indication may include an optional parameter whose presence may indicate activation of the configured/specified other mode and whose absence may indicate activation of the default mode.

The inventors notice that if terminal devices in a cell are unevenly distributed such that there are lots of terminal devices covered by one or a few beams and only a few terminal devices or no terminal device under some beams, then it may be more efficient to provide MBS multicast transmission in RRC_INACTIVE mode only in one or a few beams, i.e., not in all beams. Therefore, if there are very few multicast terminal devices in some beams, it may be better to provide the multicast service to those terminal devices by a point-to-point (PTP) transmission in RRC_CONNECTED mode. Whereas, there may be a lot of multicast terminal devices in some beams such that part of them are released to RRC_INACTIVE mode.

In view of this, a new scheduled mode, i.e., the third mode or the intermediate mode is proposed. Furthermore, the solution of the present disclosure may also be applied to a terminal device in an idle state. And the application of the solution as provided by the present disclosure is not limited to a terminal in an inactive state.

If an MBS multicast in RRC_INACTIVE is provided only in selected beams and the "third" mode of operation is selected, the network may indicate a mapping of SSB beams providing the MBS multicast in RRC _INACTIVE and PDCCH monitoring occasions for MTCH. The mapping could be similar to MTCH-SSB-MappingWindow defined for MBS broadcast but covering only the selected beams (i.e., beam sweeping over the selected beams only).

Alternatively, the mapping could be defined freely, e.g., by bitmaps, e.g., by defining for each beam index a bitmap of bitmapLength and repeating the bitmap multiple times to fill the MTCH-SSB-MappingWindow. The bitmap could indicate the PDCCH monitoring occasions for the given beam, for example, a value of 1 may indicate monitoring of the corresponding PDCCH occasion and a value of 0 indicates skipping monitoring of the corresponding PDCCH occasion, or vice versa. The mapping will be described hereinafter and will not be elaborated here.

It should be noted that the third mode of operation and the bitmap based configuration described herein may be applied also when an MBS multicast transmission is provided in all beams, giving the network some scheduling freedom, when more than one beam is mapped to at least some PDCCH monitoring occasions, and at the same time providing the terminal device an opportunity to skip some PDCCH monitoring occasions when at least one beam is not mapped to all PDCCH monitoring occasions.

In some embodiments, each beam mapping mode is associated with a mapping between at least one PDCCH monitoring occasion and at least one transmission beam. A detailed explanation of a mapping for each beam mapping mode will be described below. In addition, although three beam mapping modes are explained above, it should be understood that, the mapping configuration may also configure the terminal device 120 with two beam mapping modes, e.g., the beam sweeping mode and the free scheduling mode. Alternatively, the mapping configuration may also configure the terminal device with more than three beam mapping modes, which is not limited by the present disclosure.

As indicated above, the mapping configuration 230 is optional and in some embodiments, the mapping or mappings may be predefined, for example by the communication protocols, specifications or standards, and in such a case no mapping configuration is required.

Referring back to Fig. 2, at 212, the network device 110 transmits a mode indication 240 of multicast transmission to the terminal device 120. The mode indication 240 indicates a beam mapping mode which is activated among the multiple beam mapping modes for the multicast transmission. The beam mapping mode is associated with a mapping between a transmission beam and a PDCCH monitoring occasion for the terminal device 120. For example, the network device 110 may select the intermediate mode among the three example mapping modes, and transmit a mode indication indicating the terminal device 120 to activate the intermediate mode and monitor the PDCCH monitoring occasions according to the intermediate mode.

In some embodiments, the mode indication 240 may be transmitted by the network device 110 via any of a radio resource control (RRC) signaling, or a multicast control channel, MCCH, or a medium access control (MAC) control element (CE) or a downlink control information (DCI).

In some embodiments, the mapping configuration 230 may include a configuration of the multiple beam mapping modes. For example, the mapping configuration may enumerate each beam mapping mode in a list, and assign an index value to each beam mapping mode. In such a case, the mode indication 240 may include a value indicating a desired beam mapping mode. For example, the beam sweeping mode may be assigned with a first index of value 1, the free scheduling mode may be assigned with a second index of value 2, and the intermediate mode may be assigned with a third value of 3. For example, a mode indication including a value of 3 may indicate the intermediate mode is to be activated among the beam mapping modes.

In some embodiments, there may be two mapping modes and the mode indication may further include a boolean parameter (or other types of parameters). A value 'true' may indicate that a configured mode is activated; and value 'false' may indicate that a default mode (e.g., free scheduling mode) is activated, and vice versa. Alternatively, the mode indication may further include an optional parameter whose presence may indicate activation of a configured/specified mode and whose absence may indicate activation of a default mode, and vice versa.

In some embodiments, the mapping configuration 230 may include configuration of PDCCH monitoring occasions for one or more beams which are associated with an SSB respectively. The configuration of PDCCH monitoring occasions is for partial associated SSBs. For example, three out of eight associated SSBs are configured with beams for PDCCH monitoring.

It should be understood that, the mapping configuration may have any suitable format to indicate the configuration of the beam mapping modes, and accordingly, the mapping indication may include a corresponding format to indicate a mapping mode that is activated among the multiple beam mapping modes. The format and content of the mapping configuration and the mode indication is not limited by the present disclosure.

At 221, the terminal device 120, after receiving the mode indication, may determine a beam mapping mode based on the mode indication. In some embodiments, the terminal device 120 may determine the beam mapping mode based on the mode indication 240 and the mapping configuration 230. For example, the terminal device 120 may obtain an index corresponding to a beam mapping mode to be activated from the mapping indication 240, and use the index to determine the corresponding beam mapping mode to be activated from the multiple beam mapping mode as configured by the mapping configuration 230. The determination of the beam mapping mode may include also determining which PDCCH monitoring occasion(s) the terminal device 120 should monitor.

At 213, the network device 110 may perform multicast transmission. In some embodiment, the network device 110 may use one or more beams for a multicast transmission to the terminal device 120 according to the selected scheduling mode and selected beam mapping mode. It should be understood that, although the multicast transmission 213 performed by the network device 110 is illustrated as following the step 221 of determining a beam mapping mode performed by the terminal device, but the performance sequence of these steps is not limited by the present disclosure. For example, the step 213 may be performed before the step 221, or performed simultaneously with the step 221, which means the multicast transmission is already ongoing and the mode indication 240 is a mode switching indication), .

At step 222, the terminal device 120 may perform a PDCCH monitoring based on the mode indication, particularly based the mapping associated with the mode indication 240. In some embodiments, as described above, each beam mapping mode is associated with a mapping between at least one PDCCH monitoring occasion and at least one transmission beam. Accordingly, the terminal device 120 may determine the mapping based on the mode indication 240 and perform the PDCCH monitoring based on mode indication For example, the terminal device 120 may skip monitoring of a PDCCH monitoring occasion on (e.g., allocated to) a transmission beam not intended for the terminal device 120, monitor another PDCCH monitoring occasion not mapped to a specific transmission beam or scheduled freely, and monitor a PDCCH monitoring occasion mapped to a transmission beam received by the terminal device 120.

At step 214, the network device 110 may determine to switch from the mapping mode to another mapping mode. In some embodiments, the network device 110 may determine to switch from the current activated beam mapping mode to another beam mapping mode depending on one or more predetermined conditions, e.g., a state of the terminal device, a condition of the cell, etc. For example, if the current beam mapping mode is a beam sweeping mode, then the network device 110 may determine to instruct the terminal device 120 to switch from the beam sweeping mode to a free scheduling mode.

This switching may happen, for example, when no more terminal devices are served in an inactive mode in that cell. The network device may then decide to switch to free scheduling mode which is currently supported for MBS multicast in connected mode. Or if the current beam mapping mode is a free scheduling mode, for example, since all terminal devices receiving MBS multicast in the cell are in connected mode, the network device may then determine to instruct the terminal device 120 to switch from the free scheduling mode to a beam seeping mode when one or more terminal devices are released to inactive mode.

At step 215, the network device 110 may transmit another mode indication 260 to the terminal device 120, and the another mode indication 260 may indicate the terminal device 120 to activate another beam mapping mode among the multiple beam mapping modes, or switch from one mapping mode to another mapping mode. In some embodiments, the mode indication 260 is transmitted by the network device 110 via one of a radio resource control (RRC) signaling, or a multicast control channel, MCCH, or a medium access control (MAC) control element (CE) or a downlink control information (DCI).

In some embodiments, the mode indication 260 transmitted by the network device 110 may have the same format as the mode indication 240 transmitted in step 212, but with a different indication information, for example indicates the terminal device 120 to activate or switch to another beam mapping mode. For example, in a situation that the mapping configuration 230 may enumerate each beam mapping mode in a list, and assign an index value to each beam mapping mode, the mode indication 260 may include an updated value indicating a desired beam mapping mode. For example, the beam sweeping mode is assigned with a first index of value 1, the free scheduling mode is assigned with a second index of value 2, and the intermediate mode is assigned with a third value of 3. The mode indication 240 includes a value 3 and indicates the terminal device 120 to activate the third beam mapping mode (e.g., the intermediate mode). Once determining to switch from the third beam mapping mode to a second beam mapping mode (e.g., the free scheduling mode), the network device 110 may transmit another mode indication 260 with a value of 2 to indicate the terminal device 120 to activate the second beam mapping mode.

Alternatively, the network device 110 may provide another type of indication to inform the terminal device 120 to switch from the currently activated mode to another beam mapping mode. For example, the network device 110 may transmit a switching indication indicating the terminal device 120 to switch to a neighbor beam mapping mode, or to a random beam mapping mode, depending on a predefined configuration for the switching indication. For example, the switching indication may include a field with one or more bits. With a predefined configuration for each bit, the switching indication may indicate the terminal device 120 to switch to a neighbor beam mapping mode or to a random beam mapping mode. The indication for informing the terminal device 120 to switch from one beam mapping mode to another beam mapping mode may be implemented by a variety of ways, and not limited to the example ways as described in the present disclosure.

At 223, the terminal device 120 may switch from the beam mapping mode to another beam mapping mode as indicated in another mode indication 260. And at 216, the network device 110 may perform the multicast transmission according to the mapping mode or the new scheduling mode. In some embodiment, the network device 110 may transmit one or more beams for a multicast transmission to the terminal device 120 according to the mapping between a PDCCH occasion with a beam transmitted to the terminal device 120.

At step 224, the terminal device 120 may perform a PDCCH monitoring based on the updated mapping indication, particularly based on the mapping associated with the updated mapping mode indication by the mode indication 260. In some embodiments, as described above, each beam mapping mode is associated with a mapping between at least one PDCCH monitoring occasion and at least one transmission beam. Accordingly, the terminal device 120 may perform the PDCCH monitoring based on the mapping associated with the mapping mode indicated by the mode indication. For example, the terminal device 120 may skip monitoring of a PDCCH monitoring occasion on (e.g., allocated to) a transmission beam but not intended for the terminal device 120, monitor another PDCCH monitoring occasion not mapped to a specific transmission beam or scheduled freely, and monitor a PDCCH monitoring occasion mapped to a transmission beam intended for the terminal device 120.

Advantageously, the network device can configure multiple mapping modes for a transmission beam and a PDCCH monitoring occasion, indicate the terminal to activate one mapping mode, and switch from the activated mapping mode into another mapping mode, therefore, a configuration and a control of the multicast transmission to the terminal device is more flexible and dynamic. In addition, the terminal device, may be aware of which PDCCH monitoring occasion(s) to be monitored and which PDCCH monitoring occasion(s) may be skipped during a monitoring process for receiving a multicast transmission. Therefore, the power consumption of the terminal device is significantly reduced and the monitoring efficiency is significantly improved.

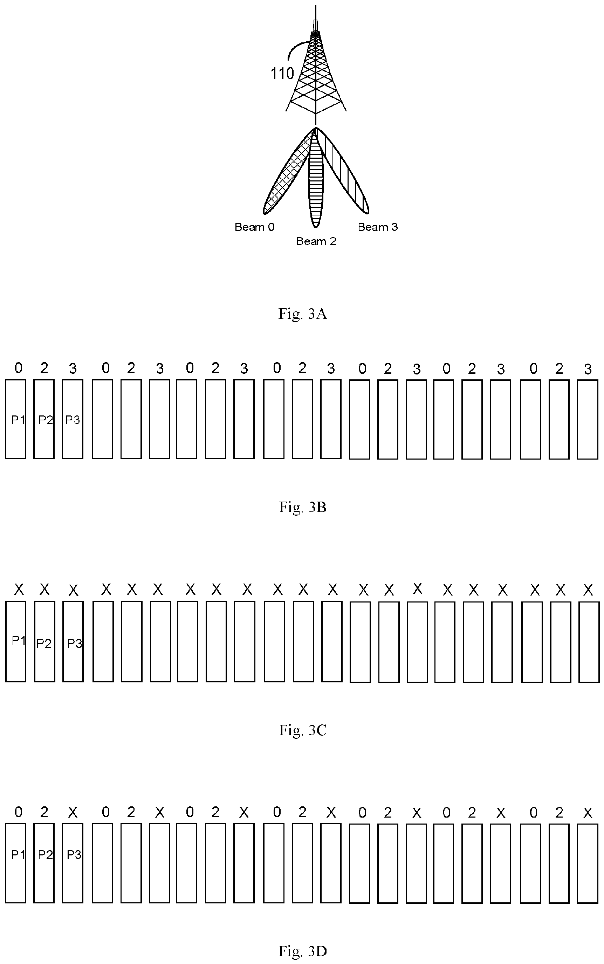

As describe above, the PDCCH monitoring is performed by the terminal device 120 based on a mapping between a PDCCH monitoring occasion and a transmission beam. For illustrative purposes, an example of a mapping for each beam mapping mode will be described with reference to Fig. 3A-Fig. 3D.

Fig. 3A illustrates example beams for the multicast transmission, transmitted by the network device, according to some embodiments of the present disclosure, and Fig. 3B-Fig. 3D illustrate example mappings between PDCCH monitoring occasions to transmission beams for multiple beam mapping modes, respectively, according to embodiments of the present disclosure. In some embodiments, the transmission beams may be used for multicast transmissions.

An example of beams transmitted by the network device according to some embodiments of the present disclosure is shown in Fig. 3A. In the example of Fig. 3A, there are three transmission beams or three SSB beams (Beam 0, Beam 2, and Beam 3) for the multicast transmission, which are associated with three beam indices, or a SSB indices, CSI-RS indices, or values 0, 2, 3, respectively.

As illustrated in Fig. 3B, the three transmission beams are swept periodically on three PDCCH monitoring occasions (P1, P2, and P3 in a period) in the beam sweeping scheduling. In such a case, the three PDCCH monitoring occasions may be mapped to three transmission beams (Beam 0, Beam 2, and Beam 3) respectively, as shown in Fig. 3B. It should be noted that, the beams may be scheduling periodically, and thus mapping between the PDCCH occasions and the beams are same for each period, and the mapping in one period is described for the purpose of clarity and brevity.

It is seen in Fig. 3B that among the transmission beams and the PDCCH monitoring occasions, all the three PDCCH monitoring occasions (P1, P2, and P3) in a period have been pre-configured and mapped to (e.g., allocated to) all the beams (Beam 0, Beam 2, and Beam 2), respectively. For example, the first PDCCH monitoring occasion P1 is pre-configured and mapped to the first beam (Beam 0), the second PDCCH monitoring occasion P2 is pre-configured and mapped to the second beam (Beam 2), and the third PDCCH monitoring occasion P3 is pre-configured and mapped to the third (Beam 3), as shown in Fig. 3B The mapping as shown in Fig. 3B may be for the first beam mapping mode as described above, which is also called as the beam sweeping mode.

A second mapping between PDCCH monitoring occasions to transmission beams is shown in Fig. 3C. In the example of Fig. 3C, the free scheduling mode is used and it is possible to transmit any of three beams on each PDCCH occasion. Thus each of three transmission beams (Beam 0, Beam 2, and Beam 3) may be mapped to any of PDCCH monitoring occasions (P1, P2, and P3) in each period, as shown in Fig. 3C. In other words, among the transmission beams and the PDCCH monitoring occasions, all the three PDCCH monitoring occasions (P1, P2, and P3) are dynamically scheduled and are not mapped to a specific beam (Beam 0, Beam 2, or Beam 3). It should be noted that, the beams may be scheduling periodically, and thus, the mapping between the PDCCH occasions and the beams are same for each period, and the mapping in one period is described for the purpose of clarity and brevity.

In some embodiments the mapping illustrated in Fig 3C can also be considered as `no mapping', where none of the beams is mapped to a specific PDCCH monitoring occasion meaning that any beam can be transmitted at any monitoring occasion. For MBS multicast in Release 17 no mapping is configured or specified and therefore, free scheduling is used as default mode. The terminal device therefore has to monitor all the PDCCH monitoring occasions to receive a multicast transmission.

For example, on the first PDCCH monitoring occasion P1, a beam is dynamically scheduled and may be mapped to the any of a beam among Beam 0, Beam 2, or Beam 3, the second PDCCH monitoring occasion P2, another beam is dynamically scheduled and thus may be mapped to the any of a beam among Beam 0, Beam 2, or Beam 3, and on the third PDCCH monitoring occasion P3, a further beam is dynamically scheduled and may be mapped to the any of a beam among Beam 0, Beam 2, or Beam 3 too. The mapping as shown in Fig. 3C may be for the second beam mapping mode as described above, which is the free scheduling mode.

A third mapping between PDCCH monitoring occasions to transmission beams is shown in Fig. 3D. In the example of Fig. 3D, an intermediate mode is used, wherein at least on a part of PDCCH occasions a beam may be freely scheduled. Therefore, among three PDCCH monitoring occasions (P1, P2, and P3) in each period, a first part of the three PDCCH monitoring occasions (P1, P2, and P3) have been pre-configured and mapped to at least one transmission beam (e.g., at least one beam of Beam 0, Beam 2, or Beam 3), respectively. A second part of the three PDCCH monitoring occasions (P1, P2, and P3) are dynamically scheduled and are not mapped to a specific beam among Beam 0, Beam 2, or Beam 3. Alternatively, on at least one PDCCH monitoring occasions among the three PDCCH monitoring occasions (P1, P2, and P3), a part of beams is freely scheduled. The beams may be scheduling periodically, thus the mapping between the PDCCH occasions and the beams are same for each period, and the mapping in one period is described for the purpose of clarity and brevity.

For example, the first PDCCH monitoring occasion P1 is pre-configured and mapped to (e.g., allocated to) the first beam (Beam 0), the second PDCCH monitoring occasion P2 is pre-configured and mapped to (e.g., allocated to) the second beam (Beam 2), and the third PDCCH monitoring occasion P3 is dynamically scheduled and may be mapped to the any of a beam among Beam 0, Beam 2, or Beam 3. The mapping as shown in Fig. 3D may be for an embodiment of the third beam mapping mode as described above, which is the intermediate mode.

It should be understood that, the number of the PDCCH monitoring occasions and the number of beams are not limited to be three, any numbers may be used depending on the actual applications and mappings. In addition, the PDCCH monitoring occasions may be mapped to the beams in variety of ways which is not limited to example embodiment of the present disclosure.

In some embodiment, the mapping relationship for each beam mapping mode may be indicated or represented by a bitmap. In some embodiments, a beam mapping mode may be associated with one or more bitmaps, and the one or more bitmaps are respectively associated with one or more configured beams for the multicast transmission, and each of the one or more bitmaps may include multiple bits respectively associated with PDCCH monitoring occasions. The bitmap may indicate for each SSB index in which PDCCH monitoring occasions UE should monitor to receive a given SSB beam.

For example, for a first beam mapping mode, e.g., the beam sweeping mode, as shown in Fig. 3B, each bitmap may have a length of 2 and be associated with each of the configured beams (e.g., Beam 0, Beam 2, and Beam 3) and each bitmap for each configured beam may be represented by the following Table 1. Alternatively, it is possible to have for example a bitmap with a 6-bit length, i.e., a repeated version of bitmap with the 3-bit length. As shown in Table 1, repeating a bit pattern 100 may result in a bit sequence 100100.

**Table 1**

| Beam | SSB index | Bitmap |
|---|---|---|
| Beam 0 | 0 | 100 or 100100 |
| Beam 2 | 2 | 010 or 010010 |
| Beam 3 | 3 | 001 or 001001 |

Similarly, for a second beam mapping mode, e.g., the free scheduling mode, as shown in Fig. 3C, each bitmap may be associated with each of the configured beams (e.g., Beam 0, Beam 2, and Beam 3) and each bitmap for each configured beam may be represented by the following Table 2. Table 2 also shows some example alternatives for the bitmap that all result into the same bit pattern when repeated multiple times. Similarly, it is possible to have for example a bitmap with a 2-bit, 4-bit length or other length.

**Table 2**

| Beam | SSB index | Bitmap |
|---|---|---|
| Beam 0 | 0 | 111 or 11 or 1111 |
| Beam 2 | 2 | 111 or 11 or 1111 |
| Beam 3 | 3 | 111 or 11 or 1111 |

Similarly, for an embodiments of a third beam mapping mode, e.g., the intermediate mode, as shown in Fig. 3D, each bitmap may be associated with each of the configured beams (e.g., Beam 0, Beam 2, and Beam 3) and each bitmap for each configured beam may be represented by the following Table 3. Similarly it also possible to have for example a bit map with a 6-bit length, i.e., a repeated version of bitmap with the 3-bit length.

**Table 3**

| Beam | SSB index | Bitmap |
|---|---|---|
| Beam 0 | 0 | 101 or 101101 |
| Beam 2 | 2 | 011 or 011011 |
| Beam 3 | 3 | 001 or 001001 |

In some embodiments, a value of each bit in multiple bits is indicative of whether an associated PDCCH monitoring occasion is to be monitored or to be skipped by the terminal device 120. In some embodiment, the value 1 in a bitmap indicates monitoring the corresponding PDCCH monitoring occasion, and the value 0 in the bitmap indicates skipping monitoring of the corresponding PDCCH monitoring occasion, or vice versa. For example, if the terminal device 120 receives Beam 0 in the intermediate mode, the terminal device 120 may use the bitmap associated with the Beam 0, which is 101, and monitor the first and the third PDCCH monitoring occasion based on the bitmap for the Beam 0. The terminal device 120 may monitor the PDCCH monitoring occasions based on the values of the bits in the corresponding bitmap.

Another example for the intermediate mode is shown in Table 4. In this case, more than one beam (e.g., two beams) may be mapped to at least one PDCCH monitoring occasion. For example, in the first PDCCH monitoring occasion, either Beam 0 or Beam 3 is transmitted, in the second PDCCH monitoring occasion, either Beam 2 or Beam 3 is transmitted, and in the third occasion, Beam 0 or Beam 2 is transmitted, and so on when the bitmap is repeated periodically. This mapping may provide the network device 110 some scheduling freedom (not full freedom) compared to beam sweeping mode and the terminal device does not need to monitor all the PDCCH monitoring occasions at the same time as in (fully) free scheduling mode. Similarly it also possible to have for example a bit map with a 6-bit length, i.e., a repeated version of bitmap with the 3-bit length.

**Table 4**

| Beam | SSB index | Bitmap |
|---|---|---|
| Beam 0 | 0 | 101 or 101101 |
| Beam 2 | 2 | 011 or 011011 |
| Beam 3 | 3 | 110 or 110110 |

It should be understood that, although the bitmaps are illustrated with a 3-bit length or 6-bit length shown in the tables, the bitmaps may be of any length providing the periodicity of the pattern, and the length of the bitmap is not limited in the present disclosure.

Alternatively, a bitmap included in each beam mapping mode may be associated with a PDCCH monitoring occasion, and may indicate which beam(s) the terminal device 120 may monitor in that PDCCH monitoring occasion. Specifically, a beam mapping mode may include one or more bitmaps respectively associated with one or more PDCCH monitoring occasions, and each of the one or more bitmaps may include multiple bits respectively associated with transmission beams. For example, each of bitmaps includes multiple bits respectively associated with multiple beams for an associated PDCCH monitoring occasion, and a value of each bit in multiple bits of each bitmap is indicative of whether an associated beam may be transmitted/monitored during the associated PDCCH monitoring occasion.

For example, for a first beam mapping mode, e.g., the beam sweeping mode, as shown in Fig. 3B, each bitmap may be associated with each of the PDCCH monitoring occasions (e.g., P1, P2, and P3) and a bitmap may indicate which beam(s) may be transmitted/monitored for a corresponding PDCCH monitoring occasion.

For example, the bitmaps built according to Fig. 3B may be represented by the following Table 5. It is possible to have for example a bitmap with a 6-bit length, i.e., a repeated version of bitmap with the 3-bit length due to the periodical characteristics. As shown in Table 5, repeating a bit pattern 100 may result in a bit sequence 100100.

**Table 5**

| PDCCH Monitoring Occasion | Bitmap |
|---|---|
| P1 | 100 or 100100 |
| P2 | 010 or 101010 |
| P3 | 001 or 001001 |

In some embodiments, a value of each bit in multiple bits of each bitmap is indicative of whether an associated beam may be transmitted by the network device 110 or monitored by the terminal device 120 during the associated PDCCH monitoring occasion. For example, a value 1 of a bit may indicate a beam corresponding to the bit may be transmitted/monitored, while a value 0 of a bit may indicate a beam corresponding to the bit may not be transmitted/monitored, or vice versa. According to Table 5, the first beam (Beam 0) may be transmitted/monitored during the first PDCCH monitoring occasion P1, the second beam (Beam 2) may be transmitted/monitored during the second PDCCH monitoring occasion P2, and the third beam (Beam 3) may be transmitted/monitored during the third PDCCH monitoring occasion P3.

Similarly, for a second beam mapping mode, e.g., the free scheduling mode, as shown in Fig. 3C, each bitmap may be associated with each of the PDCCH monitoring occasions (e.g., P1, P2, and P3) and bitmap may indicate which beam(s) may be transmitted or monitored for a corresponding PDCCH monitoring occasion.

For example, the bitmaps built according to Fig. 3C may be represented by the following Table 5. It is possible to have for example a bitmap with a 6-bit length, i.e., a repeated version of bitmap with the 3-bit length due to the periodical characteristics. As shown in Table 6, repeating a bit pattern 111 may result in a bit sequence 111111.

**Table 6**

| PDCCH Monitoring Occasion | Bitmap |
|---|---|
| P1 | 111 or 111111 |
| P2 | 111 or 111111 |
| P3 | 111 or 111111 |

According to Table 6, all the beams (Beam 0, Beam 2, or Beam 3) may be monitored during any of the first PDCCH monitoring occasion P1, the second PDCCH monitoring occasion P2, and the third PDCCH monitoring occasion P3. Thus, in this case one bitmap may be configured for P1 and repeat the configured bitmap.

For a third beam mapping mode, e.g., the intermediate mode, example as shown in Fig. 3D, similarly each bitmap may be associated with each of the PDCCH monitoring occasions (e.g., P1, P2, and P3) and each bitmap may indicate which beam(s) may be transmitted/monitored for a corresponding PDCCH monitoring occasion.

For example, the bitmaps built according to Fig. 3D may be represented by the following Table 7. It is possible to have for example a bitmap with a 6-bit length, i.e., a repeated version of bitmap with the 3-bit length due to the periodical characteristics. As shown in Table 7, repeating a bit pattern 100 may result in a bit sequence 100100.

**Table 7**

| PDCCH Monitoring Occasion | Bitmap |
|---|---|
| P1 | 100 or 100100 |
| P2 | 010 or 010010 |
| P3 | 111 or 111111 |

According to Table 7, the first beam (Beam 0) may be transmitted/monitored during the first PDCCH monitoring occasion P1, the second beam (Beam 2) may be transmitted/monitored during the second PDCCH monitoring occasion P2, and all of the first, second, and third beams (Beam 0, Beam 2 or Beam 3) may be transmitted/monitored during the third PDCCH monitoring occasion P1.

It should be understood that, although the bitmaps are illustrated with a 3-bit length or 6-bit length shown in the tables, the bitmaps may be of any length providing the periodicity of the pattern, and the length of the bitmap is not limited in the present disclosure.

In some embodiments, the bitmaps may be included in the mapping configuration 230 and may be used by the terminal device 120 to perform a PDCCH monitoring. In some embodiments, the bitmaps may be determined by the terminal device 120 based on the mode indication 240 and the mapping configuration 230 (e.g., when the mapping configuration 230 includes information about which beam is mapped to which PDCCH occasion, the terminal device 120 may determine the bitmaps based on the information), and the terminal device 120 may use the bitmaps to perform PDCCH monitoring.

In some embodiments, different mapping modes can be presented as alternative SSB mapping configurations, and UE could be configured with multiple mappings and then MCCH, MAC CE or DCI would tell the currently used mapping, i.e., activate a mapping.

In addition, the term "SSB beams/indices" as used herein refers to beams whose measurements are based on SSBs. The beams can also be so called `CSI-RS beams', i.e., beams whose measurements are based on CSI-RS. Then, instead of SSB index, it may use "CSI-RS index" or a "beam index" in general. Thus, the bitmaps above may be mapped to any of "beam index", "SSB index" or "CSI-RS index". The beams to be used in the mapping may be configured in system information block (SIB) or over MCCH.

In some embodiments, respectively mapping mode may be configured by an RRC message. The first mode (the full beam sweeping) may be configured in a similar way as for Rel-17 MBS broadcast (MTCH-SSB-MappingWindowList and MTCH-SSB-MappingWindowIndex). The second mode (the free scheduling mode) does not need any specific RRC configuration in addition to normal search Space configuration. For the third mode (the intermediate mode, e.g., a partial beam sweeping) can be configured for example by configuring the above defined bitmaps for each beam/SSB index. When the third mode and the bitmaps are adopted, it is possible to represent all the modes by configuring alternative bitmaps for each SSB index. In other words, bitmaps as shown above in Tables 1 to 6 may be changed, by means of an RRC message sent via dedicated SRB or broadcast via MCCH, or MAC CE. The activation of a set of bitmaps or switching between two or more sets of bitmaps may be done via MCCH, MAC CE, or a DCI signaling.

In some embodiments, the configured bitmap may be repeated as many times as needed to fill the MTCH-SSB-MappingWindow. The bitmap can be of any length and thus any periodicity for a given beam monitoring can be implemented.

Furthermore, in addition to the bitmap, the mapping relationship may also be represented by any other suitable forms, and the present disclosure does not limit the format for presenting the mapping relationship between a PDCCH occasion and a beam for transmission.

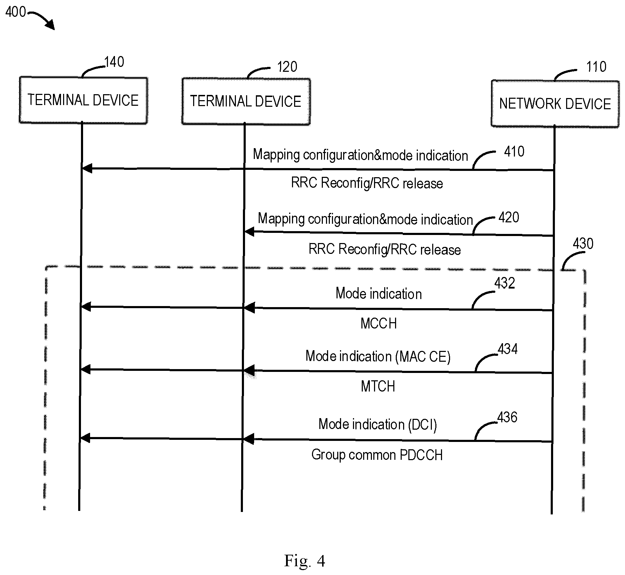

Fig. 4 illustrates an example signaling process for mapping configuration and mode indication according to some embodiments of the present disclosure. For the purpose of discussion, the process 400 will be described with reference to Fig. 1. The process 400 may involve the network device 110 and two terminal devices 120 and 140 as shown in Fig. 1. For the purpose of illustration, the terminal devices 120 and 140 for performing the process 400 is illustrative and any other terminal devices may be involved in the signaling process 400, and the number of terminal device in Fig. 4 may not be limited to be two.

It may be understood that although the process 400 is described in combination with the communication network environment 100 of Fig. 1, the process 400 may be likewise applied to other communication network scenarios with multicast transmissions. Furthermore, in the process 400, it is possible to add, omit, modify one or more operations, or the operations may also be performed in any suitable order without departing from the scope of the present disclosure.

In Fig. 4, at 410, the network device 110 may transmit a mapping configuration (for example a SSB-MappingList) and a mode indication (for example, SSB-Mapping index) via a dedicated RRC signaling mode, e.g., an RRC reconfiguration message or an RRC release message to the terminal device 140. Additionally or alternatively, at 420, the network device 110 may transmit a mapping configuration and a mode indication via a dedicated RRC signaling mode, e.g., an RRC Reconfiguration message or an RRC release message to the terminal device 120. In other words, the mapping configuration and a mode indication may be terminal device specific. In order to receive a dedicated RRC signaling, the terminal devices 120 and 140 are assumed to be in connected mode while receiving the signaling.

Although in Fig. 4, a transmission of the mapping configuration and the mode indication is shown in a same signaling, it should be understood that, the present disclosure is not limited to this, a transmission of the mapping configuration and a transmission of the mode indication may be performed in separate signaling.

Although the step 410 is performed before the step 420, however, the sequence of transmitting a mapping configuration to a terminal device is not limited. For example, the network device 110 may transmit the mapping configuration to the terminal device 140 first and then transmit the mapping configuration to the terminal device 120; or the network device 110 may transmit the mapping configuration to the terminal device 120 first and then transmit the mapping configuration to the terminal device 140; or the network device 110 may transmit the mapping configuration simultaneously to the terminal device 140 and the terminal device 120. In some embodiments, the signaling process 400 may be used to change a beam mapping mode for a terminal device in a connected state by using the dedicated RRC signaling as shown at step 410. In that case the mode indication may be transmitted.

The terminal device 120 and 140 may be configured according to the beam mapping mode and further determine a beam mapping mode according to the mode indication. The description of the mapping configuration and the mode indication has been referred to those as described above, and for a purpose of brevity and clarity, the repetitive description is omitted herein.

When the network device 110 determines to switch to another beam mapping mode, the network device 110 may transmit another mode indication to the terminal device 140 and/or terminal device 120 at 430. The network device 110 may transmit another mode indication via a variety of messages. For example, the network device 110 may transmit the other mode indication via a multicast control channel (MCCH) as shown at 432. Alternatively, the network device 110 may transmit another mode indication via a medium access control (MAC) control element (CE) over a multicast traffic channel (MTCH) at 434. Alternatively, the network device 110 may transmit another mode indication via a downlink control information (DCI) over a group common PDCCH. For example, two bits in DCI may indicate one of the above three beam mapping modes.

As illustrated in Fig. 4, an advantage of using either MCCH, MAC CE or DCI for the mode indication is that multiple terminal devices can receive the same transmission. Furthermore, the mode indication can be received by terminal devices in connected or inactive mode. It is natural for the network device to transmit the mode indication transmission to all beams especially when the transmitting to the terminal device in inactive mode.

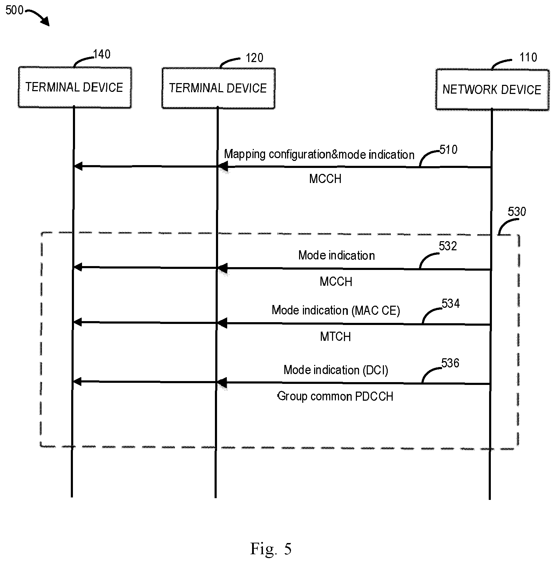

Fig. 5 illustrates another example of signaling process for mapping configuration and mode indication according to some embodiments of the present disclosure. For the purpose of discussion, the process 500 will be described with reference to Fig. 1. The process 500 may involve the network device 110 and two terminal devices 120 and 140 as shown in Fig. 1. For the purpose of illustration, the terminal devices 120 and 140 for performing the process 500 is illustrative and any other terminal devices may be involved in the signaling process 500, and the number of terminal device in Fig. 5 may not be limited to be two.

Fig. 5 is similar to Fig. 4, and the only difference lies in a signaling of a transmission of the mapping configuration. Specifically, as shown in Fig. 5, the network device 110 may transmit the mapping configuration and the mode indication via a MCCH, instead of the dedicated RRC message. Accordingly, the terminal device 120 and/or terminal 140 may monitor the MCCH for receiving the mapping configuration, both in inactive state as well as in the connected state. The switch stage 530 is similar to the switch stage 430, and the repetitive description is omitted herein for brevity and clarity.

In some embodiments, the mapping configuration may be transmitted in a group common RRC signaling via MCCH, as shown at 510. Accordingly, for a transmission of mode indication via MCCH at 532, it is more straightforward and convenient for the network device 110 to configure a mapping mode and then switch to another mode by MCCH.

In some embodiments, MCCH/MAC-CE/DCI may be used to indicate a start of the first beam mapping mode, e.g., the beam sweeping mode, to a terminal device in the connected state. Accordingly, the terminal device in the connected state may be aware of the beam-sweeping operation to be performed for a terminal device in an inactive state and determines not to unnecessarily monitor all the PDCCH monitoring occasions. Therefore, the power consumption is significantly reduced.

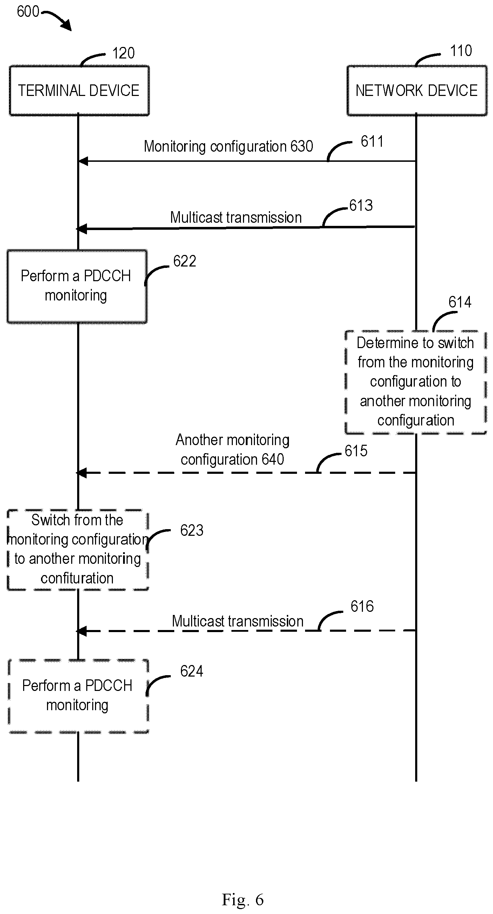

Fig. 6 illustrates another example of signaling process 600 for configuration of a multicast transmission according to some embodiments of the present disclosure. For the purpose of discussion, the process 600 will be described with reference to Fig. 1. The process 600 may involve the network device 110 and any of terminal devices 120, 140, or 150 as shown in Fig. 1. For the purpose of illustration, the terminal device for performing the process 600 is the terminal device 120. The process 600 may also be applied to any of the terminal devices 140 or 150 or any other terminal devices not shown in Fig. 1.

It may be understood that although only one terminal device 120 is shown in Fig. 6, the network device 110 may communicate with more than one terminal device. In addition, although the process 600 is described in combination with the communication network environment 100 of Fig. 1, the process 600 may be likewise applied to other communication network scenarios with multicast transmissions. Furthermore, in the process 600, it is possible to add, omit, modify one or more operations, or the operations may also be performed in any suitable order without departing from the scope of the present disclosure.

At 611, the network device 110 may transmit a monitoring configuration 630 to the terminal device 120, and the monitoring configuration 630 indicates one or more physical downlink control channel (PDCCH) monitoring occasions for at least one transmission beam associated with a synchronization signal block (SSB) beam. In some embodiments, the monitoring configuration may configure terminal device 120 with an indication of an association of a PDCCH monitoring occasion and a SSB beam, e.g., a SSB beam for a multicast transmission. In some embodiment, the monitoring configuration may indicate a PDCCH monitoring occasion associated with a beam, and on another PDCCH monitoring occasion, the beams are dynamically scheduled.

For example, for an example as shown in Figs. 3A and 3D, the monitoring configuration 630 may indicate that the first PDCCH monitoring occasion P1 is associated with the first beam (Beam 0), the second PDCCH monitoring occasion P2 is associated with the second beam (Beam 2), and the third PDCCH monitoring occasion P3 is dynamically scheduled and may be associated with the any beam.

In some embodiments, the monitoring configuration may indicate one or more beams associated with respectively PDCCH monitoring occasions.

In some embodiments, the monitoring configuration is selected from mappings for multiple beam mapping modes, which may be pre-defined or pre-configured by a mapping configuration. The monitoring configuration may also be used to indicate, for example, one of the first to third mapping modes. In such a case, the monitoring configuration may function as a beam mapping mode described with reference to Fig. 2 to Fig. 5. Similarly to the description as described above, the terminal device may receive the monitoring configuration, and then obtain or determine at least one bitmap associated with at least one configured beam respectively.

Therefore, in some embodiments, the bitmaps may be included in the monitoring configuration 630 and the terminal device may obtain the bitmaps from the monitoring configuration 630. In some embodiments, the terminal device 120 may determine the bitmaps based on the monitoring configuration 630 and pre-defined or pre-configured mappings for multiple beam mapping modes. The information about the bitmap is similar as the description as described above, and the repetitive description is omitted herein for the purpose of clarity and brevity.

Then at 613, the network device 110 performs a multicast transmission and the terminal device performs a PDCCH monitoring based on the mapping configuration. The processes of 613 and 622 are similar to processes 213 and 222 as shown in Fig. 2, and the repetitive description is omitted herein for the purpose of clarity and brevity.

As shown in Fig. 6, the network device may further determine to switch from a current monitoring configuration to another monitoring configuration, e.g., as shown by processes 614 and 615. The switching process is similar to those as shown in Fig. 2, with a difference that the network device 110 transmits another monitoring configuration 640 to the terminal device. The other monitoring configuration 640 may configure the terminal device 120 with another indication of an association of a PDCCH monitoring occasion and a SSB beam, e.g., a SSB beam for a multicast transmission. Likewise, the monitoring configuration 640 may be selected from mappings for the beam mapping modes (pre-defined in standards or pre-configured by the mapping configuration), and the terminal device 120 is configured to obtain the mappings based on the monitoring configuration 640 and implements the monitoring configuration switching process based on the mappings indicated by the monitoring configuration.

The network device 110 may transmits a multicast transmission at 616 and the terminal device 120 may perform a PDCCH monitoring based on the updated monitoring configuration.

Advantageously, the terminal device is aware of which PDCCH monitoring occasion(s) to be monitored and which PDCCH monitoring occasion(s) may be skipped during a monitoring process for receiving a multicast transmission. Therefore, the power consumption of the terminal device is significantly reduced and the monitoring efficiency is significantly improved. In addition, the network device may configure multiple mapping modes for a transmission beam and a PDCCH monitoring occasion, indicate one of the mapping modes, and switch from the mapping mode into another mapping mode if necessary, and therefore, a configuration and a control of the multicast transmission to the terminal device is more flexible and dynamic.

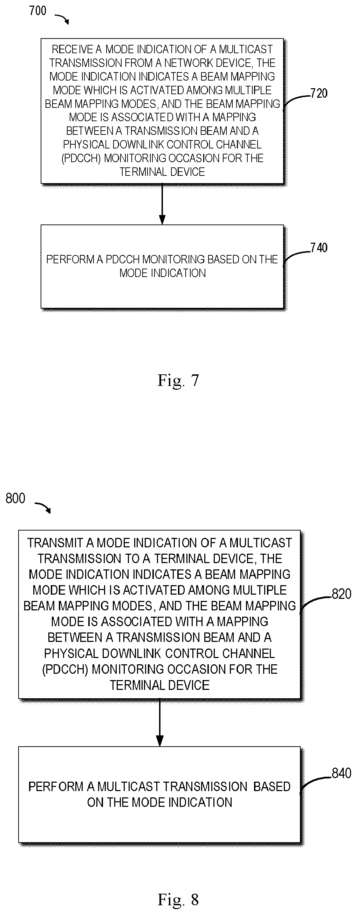

Fig. 7 shows a flowchart of an example method 700 implemented at a terminal device (for example, the terminal device 120) in accordance with some embodiments of the present disclosure. For the purpose of discussion, the method 700 will be described from the perspective of the terminal device 120 with reference to Fig. 1.

At 720, the terminal device 120 receives a mode indication of multicast transmission from a network device. In some embodiments, the mode indication indicates a beam mapping mode which is activated among multiple beam mapping modes, and the beam mapping mode is associated with a mapping between a transmission beam and a physical downlink control channel (PDCCH) monitoring occasion for the terminal device.

At 740, the terminal device 120 performs a PDCCH monitoring based on the mode indication.

In some embodiments, the mode indication may be received via one or more of a radio resource control, RRC, signaling, or a multicast control channel (MCCH), or a medium access control (MAC) control element (CE), or a downlink control information (DCI).

In some embodiments, the terminal device 120 may further receive a mapping configuration indicating a configuration of the multiple beam mapping modes from the network device 110.

In some embodiments, the mapping configuration may be received via an RRC reconfiguration message or an RRC release message or via an MCCH.

In some embodiments, the beam mapping mode may include one or more bitmaps respectively associated with configured beams for the multicast transmission, and each of the one or more bitmaps may include multiple bits respectively associated with multiple PDCCH monitoring occasions.

In some embodiments, a value of each bit in the multiple bits may be indicative of whether an associated PDCCH monitoring occasion is to be monitored or to be skipped by the terminal device.

In some embodiments, the beam mapping mode may be determined based on the mode indication and the mapping configuration.

In some embodiments, the mode indication may be received from the network device in a separate signaling from the mapping configuration.

In some embodiments, the mode indication may be received from the network device in a same signaling as the mapping configuration.

In some embodiments, the transmission beam may be associated with a synchronization signal block (SSB) beam or a channel state information-reference signal (CSI-RS) beam.

In some embodiments, the beam mapping mode may include a mapping for any of: a beam sweeping mode, in which a PDCCH monitoring occasion for a beam is pre-configured; a free scheduling mode, in which a PDCCH monitoring occasion for a beam is dynamically scheduled; or an intermediate mode, in which a PDCCH monitoring occasion for at least one beam is pre-configured, and on a PDCCH monitoring occasion, beams are freely scheduled or in which on at least one PDCCH monitoring occasion, a part of beams is freely scheduled.

In some embodiments, the terminal device 120 may further obtain another mode indication, wherein the another mode indication indicates the terminal device to activate another beam mapping mode among the plurality of beam mapping modes; and switch from the beam mapping mode into the another beam mapping mode indicated in the another mode indication.

Advantageously, a terminal device 120 is aware of which PDCCH monitoring occasion(s) to be monitored and which PDCCH monitoring occasion(s) may be skipped during a monitoring process for receiving a multicast transmission. Therefore, the power consumption of the terminal device is significantly reduced and the monitoring efficiency is significantly improved.

Fig. 8 shows a flowchart of an example method 800 implemented at a network device (for example, the network device 110) in accordance with some embodiments of the present disclosure. For the purpose of discussion, the method 800 will be described from the perspective of the network device 110 with reference to Fig. 1.

At 820, the network device 110 transmits a mode indication of multicast transmission to a terminal device 120. In some embodiments, the mode indication indicates a beam mapping mode which is activated among a plurality of beam mapping modes, and the beam mapping mode is associated with a mapping between a transmission beam and a physical downlink control channel (PDCCH) monitoring occasion for the terminal device 120.

At 840, the network device 110 performs a multicast transmission based on the mode indication.

In some embodiments, the mode indication may be transmitted via one or more of a radio resource control (RRC) signaling, or a multicast control channel (MCCH), a medium access control (MAC) control element (CE), or a downlink control information (DCI).

In some embodiments, the network device 110 may further determine to switch from the beam mapping mode into another beam mapping mode among the multiple beam mapping modes, and provide another mode indication to the terminal device 120. In some embodiments, the another mode indication may indicate the terminal device 120 to activate another beam mapping mode among the multiple beam mapping modes.

In some embodiments, the network device 110 may further transmit a mapping configuration indicating a configuration of the multiple beam mapping modes to the terminal device.

In some embodiments, the mapping configuration may be transmitted via an RRC reconfiguration message or an RRC release message or via an MCCH.

In some embodiments, the beam mapping mode may include one or more bitmaps respectively associated with configured beams for the multicast transmission, and each of the one or more bitmaps may include multiple bits respectively associated with multiple PDCCH monitoring occasions.

In some embodiments, a value of each bit in the multiple bits is indicative of whether an associated PDCCH monitoring occasion is to be monitored or to be skipped by the terminal device 120.

In some embodiments, the mode indication and the mapping configuration may be used to determine the beam mapping mode.

In some embodiments, the mode indication may be transmitted to the terminal device 120 in a separate signaling from the mapping configuration.

In some embodiments, the mode indication may be transmitted to the terminal device in a same signaling as the mapping configuration.

In some embodiments, the transmission beam is associated with a synchronization signal block (SSB) beam or a channel state information-reference signal (CSI-RS) beam.

In some embodiments, the beam mapping mode may include a mapping for any of: a beam sweeping mode, in which a PDCCH monitoring occasion for a beam is pre-configured; a free scheduling mode, in which a PDCCH monitoring occasion for a beam is dynamically scheduled; or an intermediate mode, in which a PDCCH monitoring occasion for at least one beam is pre-configured, and on a PDCCH monitoring occasion, beams are freely scheduled or in which on at least one PDCCH monitoring occasion, a part of beams is freely scheduled.

Advantageously, the network device 110 can configure multiple mapping modes for a transmission beam and a PDCCH monitoring occasion, activate one mapping mode, and switch from the activated mapping mode into another mapping mode, therefore, a configuration and a control of the multicast transmission to the terminal device is more flexible and dynamic.

In some embodiments, an apparatus capable of performing any of operations of the method 700 (for example, the terminal device 120) may include means for performing the respective steps of the method 700. The means may be implemented in any suitable form. For example, the means may be implemented in a circuitry or software module.

In some embodiments, the apparatus includes means for receiving a mode indication of multicast transmission from a network device. In some embodiments, the mode indication indicates a beam mapping mode which is activated among multiple beam mapping modes, and the beam mapping mode is associated with a mapping between a transmission beam and a physical downlink control channel (PDCCH) monitoring occasion for the terminal device. The apparatus further includes means for performing a PDCCH monitoring based on the mode indication.

In some embodiments, the mode indication may be received via one or more of a radio resource control, RRC, signaling, or a multicast control channel (MCCH), or a medium access control (MAC) control element (CE), or a downlink control information (DCI).

In some embodiments, the apparatus further may include means for receiving a mapping configuration indicating a configuration of the multiple beam mapping modes from the network device 110.

In some embodiments, the mapping configuration may be received via an RRC reconfiguration message or an RRC release message or via an MCCH.

In some embodiments, the beam mapping mode may include one or more bitmaps respectively associated with configured beams for the multicast transmission, and each of the one or more bitmaps may include multiple bits respectively associated with multiple PDCCH monitoring occasions.

In some embodiments, a value of each bit in the multiple bits may be indicative of whether an associated PDCCH monitoring occasion is to be monitored or to be skipped by the terminal device 120.

In some embodiments, the beam mapping mode may be determined based on the mode indication and the mapping configuration.

In some embodiments, the mode indication may be received from the network device 110 in a separate signaling from the mapping configuration.

In some embodiments, the mode indication may be received from the network device 110 in a same signaling as the mapping configuration.

In some embodiments, the transmission beam may be associated with a synchronization signal block (SSB) beam or a channel state information-reference signal (CSI-RS) beam.

In some embodiments, the beam mapping mode may include a mapping for any of: a beam sweeping mode, in which a PDCCH monitoring occasion for a beam is pre-configured; a free scheduling mode, in which a PDCCH monitoring occasion for a beam is dynamically scheduled; or an intermediate mode, in which a PDCCH monitoring occasion for at least one beam is pre-configured, and on a PDCCH monitoring occasion, beams are freely scheduled or in which on at least one PDCCH monitoring occasion, a part of beams is freely scheduled.

In some embodiments, the terminal device 120 may further include means for obtaining another mode indication. In some embodiments, the another mode indication indicates the terminal device 120 to activate another beam mapping mode among the multiple beam mapping modes. And the terminal device 120 may further include means for switching from the beam mapping mode into the another beam mapping mode indicated in the another mode indication.

In some example embodiments, the apparatus may further include means for performing other steps in some example embodiments of the method 700. In some example embodiments, the means may include at least one processor and at least one memory including computer program code. The at least one memory and computer program code are configured to, with the at least one processor, cause the performance of the apparatus.

Advantageously, a terminal device 120 is aware of which PDCCH monitoring occasion(s) to be monitored and which PDCCH monitoring occasion(s) may be skipped during a monitoring process for receiving a multicast transmission. Therefore, the power consumption of the terminal device is significantly reduced and the monitoring efficiency is significantly improved.

In some embodiments, an apparatus capable of performing any of the method 800 may include means for performing the respective steps of the method 800. The means may be implemented in any suitable form. For example, the means may be implemented in a circuitry or software module.

In some embodiments, the apparatus may include means for transmitting a mode indication of multicast transmission to a terminal device 120. In some embodiments, the mode indication indicates a beam mapping mode which is activated among a plurality of beam mapping modes, and the beam mapping mode is associated with a mapping between a transmission beam and a physical downlink control channel (PDCCH) monitoring occasion for the terminal device 120. The apparatus may further include means for performing a multicast transmission based on the mode indication.

In some embodiments, the mode indication may be transmitted via one or more of a radio resource control (RRC) signaling, or a multicast control channel (MCCH), a medium access control (MAC) control element (CE), or a downlink control information (DCI).

In some embodiments, the apparatus may further include means for determining to switch from the beam mapping mode into another beam mapping mode among the multiple beam mapping modes. The apparatus may further include means for providing another mode indication to the terminal device 120. In some embodiments, the another mode indication may indicate the terminal device 120 to activate another beam mapping mode among the multiple beam mapping modes.

In some embodiments, the apparatus may further include means for transmitting a mapping configuration indicating a configuration of the multiple beam mapping modes to the terminal device.

In some embodiments, the mapping configuration may be transmitted via an RRC reconfiguration message or an RRC release message or via an MCCH.

In some embodiments, the beam mapping mode may include one or more bitmaps respectively associated with configured beams for the multicast transmission, and each of the one or more bitmaps may include multiple bits respectively associated with multiple PDCCH monitoring occasions.

In some embodiments, a value of each bit in the multiple bits is indicative of whether an associated PDCCH monitoring occasion is to be monitored or to be skipped by the terminal device 120.

In some embodiments, the mode indication and the mapping configuration may be used to determine the beam mapping mode.

In some embodiments, the mode indication may be transmitted to the terminal device 120 in a separate signaling from the mapping configuration.

In some embodiments, the mode indication may be transmitted to the terminal device 120 in a same signaling as the mapping configuration.

In some embodiments, the transmission beam is associated with a synchronization signal block (SSB) beam or a channel state information-reference signal (CSI-RS) beam.

In some embodiments, the beam mapping mode may include a mapping for any of: beam sweeping mode, in which a PDCCH monitoring occasion for a beam is pre-configured; a free scheduling mode, in which a PDCCH monitoring occasion for a beam is dynamically scheduled; or an intermediate mode, in which a PDCCH monitoring occasion for at least one beam is pre-configured, and on a PDCCH monitoring occasion, beams are freely scheduled or in which on at least one PDCCH monitoring occasion, a part of beams is freely scheduled.

In some example embodiments, the apparatus may further include means for performing other steps in some example embodiments of the method 700. In some example embodiments, the means may include at least one processor and at least one memory including computer program code. The at least one memory and computer program code are configured to, with the at least one processor, cause the performance of the apparatus.

Advantageously, the network device 110 can configure multiple mapping modes for a transmission beam and a PDCCH monitoring occasion, activate one mapping mode, and switch from the activated mapping mode into another mapping mode, therefore, a configuration and a control of the multicast transmission to the terminal device is more flexible and dynamic.

It is to be appreciated that, hereinabove, operations at the network device are described in short, for simplification purposes. These operations at the network side might be corresponding to those at the terminal device. Therefore, detailed operations about some of operations or features in Fig. 8, reference may be made to those contents described above for the terminal device with reference to Figs. 2 and 7.

In some embodiments, the apparatus further may comprise means for performing the steps in some embodiments of the method 700. In some embodiments, the means may comprise at least one processor; and at least one memory including computer program code, the at least one memory and computer program code configured to, with the at least one processor, cause the performance of the apparatus.

In some embodiments, the apparatus for performing the method 700 may include means for means for receiving a mode indication of multicast transmission from a network device. In some embodiments, the mode indication indicates a beam mapping mode which is activated among multiple beam mapping modes, and the beam mapping mode is associated with a mapping between a transmission beam and a physical downlink control channel (PDCCH) monitoring occasion for the terminal device. The apparatus further includes means for performing a PDCCH monitoring based on the mode indication.

In some embodiments, the apparatus further may comprise means for performing the steps in some embodiments of the method 800. In some embodiments, the means may comprise at least one processor; and at least one memory including computer program code, the at least one memory and computer program code configured to, with the at least one processor, cause the performance of the apparatus.

In some embodiments, the apparatus for performing the method 800 may include means for transmitting a mode indication of multicast transmission to a terminal device 120. In some embodiments, the mode indication indicates a beam mapping mode which is activated among a plurality of beam mapping modes, and the beam mapping mode is associated with a mapping between a transmission beam and a physical downlink control channel (PDCCH) monitoring occasion for the terminal device 120. The apparatus may further include means for performing a multicast transmission based on the mode indication.

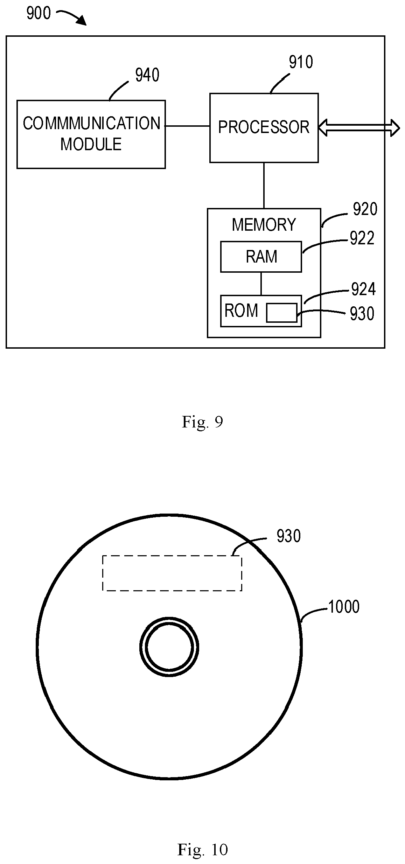

Fig. 9 is a simplified block diagram of a device 900 that is suitable for implementing embodiments of the present disclosure. The device 900 may be provided to implement the communication device, for example the terminal device 120 as shown in Fig. 1. As shown, the device 900 includes one or more processors 910, one or more memories 920 coupled to the processor 910, and one or more communication module 940 may be coupled to the processor 910.

The communication module 940 is for bidirectional communications. The communication module 940 may have at least one antenna to facilitate communication. The communication interface may represent any interface that is necessary for communication with other network elements. The communication interface may be hardware or software based interface. For example, the communication interface may be one or more transceivers. The one or more transceivers may be coupled to one or more antennas or antenna ports to wirelessly transmit and/or receive communication signals. The antennas or antenna ports may be the same or different types. The antennas or antenna ports may be located in different positions of an apparatus. The one or more transceivers allow the apparatus to communicate with other devices that may be wired and/or wireless. The transceiver may support one or more radio technologies. For example, the one or more transceivers may include a cellular subsystem, a WLAN subsystem, and/or a Bluetooth^{™} subsystem. The one or more transceivers may include processors, controllers, radios, sockets, plugs, buffers, or the like circuits to form one or more communication channels to one or more radio frequency units.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a read only memory (ROM) 924, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 922 and other volatile memories that will not last in the power-down duration.

A computer program 930 may include computer executable instructions that are executed by the associated processor 910. The program 930 may be stored in the ROM 924. The processor 710 may perform any suitable actions and processing by loading the program 930 into the RAM 922.

The embodiments of the present disclosure may be implemented by means of the program so that the device 900 may perform any process of the disclosure as discussed with reference to Figs. 1 to 8. The embodiments of the present disclosure may also be implemented by hardware or by a combination of software and hardware.

In some embodiments, the program 930 may be tangibly contained in a computer readable medium which may be included in the device 900 (such as in the memory 920) or other storage devices that are accessible by the device 900. The device 700 may load the program 930 from the computer readable medium to the RAM 922 for execution. The computer readable medium may include any types of tangible non-volatile storage, such as ROM, EPROM, a flash memory, a hard disk, CD, DVD, and the like. Fig. 10 shows an example of the computer readable medium 1000 in form of CD or DVD. The computer readable medium has the program 930 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out process signaling 200, the method 500 or 600 as described above with reference to Figs. 1 to 6. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device comprising means for:
receiving a mode indication of multicast transmission from a network device, wherein the mode indication indicates a beam mapping mode which is activated among a plurality of beam mapping modes, and wherein the beam mapping mode is associated with a mapping between a transmission beam and a physical downlink control channel, PDCCH, monitoring occasion for the terminal device; and
performing a PDCCH monitoring based on the mode indication.

2. The terminal device of claim 1, wherein the mode indication is received via at least one of a radio resource control, RRC, signaling, or a multicast control channel, MCCH, or a medium access control, MAC, control element, CE, or a downlink control information, DCI.

3. The terminal device of claim 1 or 2, comprising means for:
receiving a mapping configuration indicating a configuration of the plurality of beam mapping modes from the network device.

4. The terminal device of claim 3, wherein the mapping configuration is received via an RRC reconfiguration message or an RRC release message or via an MCCH.

5. The terminal device of any of claims 1 to 4, wherein the beam mapping mode is associated with one or more bitmaps respectively associated with configured beams for the multicast transmission, and wherein each of the one or more bitmaps comprises a plurality of bits respectively associated with a plurality of PDCCH monitoring occasions.

6. The terminal device of claim 5, wherein a value of each bit in the plurality of bits is indicative of whether an associated PDCCH monitoring occasion is to be monitored or to be skipped by the terminal device.

7. The terminal device of any of claims 3 to 6, wherein the beam mapping mode is determined based on the mode indication and the mapping configuration.

8. The terminal device of any of claims 3 to 7, wherein the mode indication is received from the network device in a separate signaling from the mapping configuration.

9. The terminal device of any of claims 3 to 7, wherein the mode indication is received from the network device in a same signaling as the mapping configuration.

10. The terminal device of any one of claims 1 to 9, wherein the transmission beam is associated with a synchronization signal block, SSB, beam or a channel state information-reference signal, CSI-RS, beam.

11. The terminal device of any of claims 1 to 10, wherein the beam mapping mode comprises a mapping for any of:
a beam sweeping mode, wherein a PDCCH monitoring occasion for a beam is pre-configured;
a free scheduling mode, wherein a PDCCH monitoring occasion for a beam is dynamically scheduled; or
an intermediate mode, wherein a PDCCH monitoring occasion for at least one beam is pre-configured, and on a PDCCH monitoring occasion, beams are freely scheduled or wherein on at least one PDCCH monitoring occasion, a part of beams is freely scheduled.

12. The terminal device of any of claims 1 to 11, comprising means for:
obtaining another mode indication, wherein the another mode indication indicates the terminal device to activate another beam mapping mode among the plurality of beam mapping modes; and
switching from the beam mapping mode into the another beam mapping mode indicated in the another mode indication.

13. A network device, comprising means for:
transmitting a mode indication of multicast transmission to a terminal device, wherein the mode indication indicates a beam mapping mode which is activated among a plurality of beam mapping modes, and wherein the beam mapping mode is associated with a mapping between a transmission beam and a physical downlink control channel, PDCCH, monitoring occasion for the terminal device; and
performing a multicast transmission based on the mode indication.

14. A method at a terminal device, comprising:
receiving a mode indication of multicast transmission from a network device, wherein the mode indication indicates a beam mapping mode which is activated among a plurality of beam mapping modes, and wherein the beam mapping mode is associated with a mapping between a transmission beam and a physical downlink control channel, PDCCH, monitoring occasion for the terminal device; and
performing a PDCCH monitoring based on the mode indication.

15. A method at a network device, comprising:
transmitting a mode indication of multicast transmission to a terminal device, wherein the mode indication indicates a beam mapping mode which is activated among a plurality of beam mapping modes, and wherein the beam mapping mode is associated with a mapping between a transmission beam and a physical downlink control channel, PDCCH, monitoring occasion for the terminal device; and
performing a multicast transmission based on the mode indication.
